# EUROPÄISCHE PATENTSCHRIFT

(11) **EP 1 614 995 B1**
(45) Veröffentlichungstag und Bekanntmachung des Hinweises auf die Patenterteilung: **08.08.2007**
(21) Anmeldenummer: 05104929.4
(22) Anmeldetag: 07.06.2005
(51) Int. Cl.: G01C 21/34, G08G 1/01

(54) **Verfahren und Routenplanungssystem zur Generierung und Speicherung von für eine dynamische Routenplanung benötigten Daten**
Method of and system for generating and storing data required for dynamic route planning
Procédé et système de génération de données nécessaires pour une planification dynamique d'itinéraire

(30) Priorität: 05.07.2004 DE 102004032499
(43) Veröffentlichungstag der Anmeldung: 11.01.2006
(73) Patentinhaber: SIEMENS AKTIENGESELLSCHAFT, 80333 München (DE)
(72) Erfinder: Flinsenberg, Ingrid Christina Maria, 5616 NV, Eindhoven (NL); Verriet, Jacobus Hedrikus Dr., 5509 NP, Veldhoven (NL)

(56) Entgegenhaltungen:
- WO-A-98/59329
- DE-C1- 10 013 603
- US-B1- 6 282 486

## Beschreibung

Die Erfindung betrifft ein Verfahren zur Generierung und Speicherung von Daten für eine dynamische Routenplanung, wobei die Routenplanung zur Planung einer Route innerhalb eines, in einzelne Kanten und Knoten unterteilten, Straßennetzes durchgeführt wird und wobei die Route in Abhängigkeit von einer, mindestens einer Kante zugeordneten, Kanteneigenschaft bestimmt wird. Des Weiteren betrifft die Erfindung ein Routenplanungssystem zur Speicherung von Daten für eine dynamische Routenplanung mit einer Recheneinheit, die mit einer Eingabeeinheit, einer Anzeigeeinheit und einem ersten Speicher, der ein in einzelne Kanten und Knoten unterteiltes Straßennetz enthält, verbunden ist, wobei die Recheneinheit zur Berechnung einer Route innerhalb des Straßennetzes in Abhängigkeit von einer, mindestens einer Kante zugeordneten, Kanteneigenschaft ausgelegt ist.

Routenplanungssysteme mit statischer Routenplanung sind insbesondere von fest in Kraftfahrzeugen eingebauten Navigationsgeräten her bekannt. Aber auch tragbare Handgeräte, wie PDA's oder die um ein Positionserfassungsmodul erweiterten Mobilfunkgeräte, sind heutzutage in der Lage, eine statische Routenplanung und eine anschließende Navigation eines Benutzers entlang dieser Route durchzuführen. Daneben gibt es noch die reinen Routenplanungssysteme, mit denen ausschließlich eine statische Route geplant, jedoch keine Navigation durchgeführt werden kann.
Unter statischer Routenplanung versteht man dabei die Bestimmung einer Route in einem Straßennetz zwischen einem Start- und einem Zielpunkt, wobei das Straßennetz statisch, d.h. zeitlich unveränderlich, ist. Für die Routenplanung ist das in einem Speicher des Routenplanungssystems abgelegte Straßennetz in Kanten und Knoten unterteilt, wobei den Kanten jeweils eigene Kanteneigenschaften zugeordnet werden, die als Routenplanungskosten verstanden werden. Der Routenplanungsalgorithmus sucht nun nach der Route zwischen dem Start- und dem Zielpunkt, die ein bestimmtes Kostenkriterium optimiert bzw. minimiert. Solche Kostenkriterien können beispielsweise sein die Länge der Gesamtroute, das Befahren möglichst weniger Autobahnen, das schnellstmögliche Erreichen des Zielpunktes etc. Als Kanteneigenschaften werden entsprechend zugeordnet die Länge der Kante, die mittlere Geschwindigkeit für diese Kante oder der Straßentyp der Kante.

Eine bekannte Erweiterung der herkömmlichen Funktionalität stellt die dynamische Routenplanung unter Berücksichtigung von aktuellen Verkehrsinformationen dar. Die per Funk empfangenen Verkehrsinformationen werden hinsichtlich ihrer Relevanz für die vorab statisch geplante Route ausgewertet. Erhöht sich infolge einer Verkehrsbehinderung die für das Zurücklegen der statischen Route benötigte Fahrzeit, so wird eine dynamische Route geplant und dem Benutzer entweder zur Auswahl angeboten oder als neue Route einer folgenden Navigation zugrunde gelegt. Bei der dynamischen Routenplanung werden die den betroffenen Straßennetz-Kanten zugeordneten Kanteneigenschaften entsprechend der Verkehrsinformation verändert, d.h. dass beispielsweise die mittlere Geschwindigkeit herabgesetzt wird. Dadurch erhöhen sich entsprechend die Routenplanungskosten für diese Kante.

Da die Verkehrsinformationen im allgemeinen nur die geographische Länge von Staus oder die Position von Behinderungsstellen angeben, nicht jedoch die zu erwartende Fahrzeitverlängerung, muss die Fahrzeitverlängerung im allgemeinen vom Routenplanungssystem ermittelt werden, wobei dies nur durch eine grobe Schätzung möglich ist, da eine Staulänge noch nichts über eine mittlere Geschwindigkeit in diesem Stau aussagt. Nachteilig ist bei der bekannten dynamischen Routenplanung des Weiteren, dass die Informationen nur binäre Inhalte haben, also "Stau vorhanden/nicht vorhanden". Daraus resultiert eine sprunghafte Änderung der von der Routenplanung vorhergesagten Fahrzeit.

Dokument US-B1-6 282 486 beschreibt die Generierung und Speicherung von Daten für eine zeitpunktabhängige, dynamische Planung einer Route innerhalb eines in Kanten und Knoten unterteilten Straßennetzes, bei dem die Route in Abhängigkeit von einer zeitpunktabhängigen Kanteneigenschaft bestimmt wird.

Zur Vermeidung dieser Nachteile wird in einer parallelen Anmeldung ein Verfahren und ein Routenplanungssystem vorgeschlagen, bei dem mindestens einer Kante des Straßennetzes als Kanteneigenschaft eine voraussichtliche Fahrzeit zugeordnet und in einem Speicher des Routenplanungssystems abgespeichert wird, wobei die voraussichtliche Fahrzeit von einem vorgegeben Zeitpunkt abhängig ist. Eine solche zeitpunktabhängige Fahrzeit ermöglicht eine zeitpunktabhängige Routenplanung. Eine zeitpunktabhängige Routenplanung ist wiederum nichts anderes als eine dynamische Routenplanung, da hierbei die zeitlich veränderlichen Verkehrsbedingungen innerhalb des Straßennetzes berücksichtigt werden.

Insbesondere aus Ballungsgebieten ist ja die Tatsache bekannt, dass beispielsweise im Laufe eines Tages die Verkehrsbelastung bestimmter Streckenabschnitte deutlichen Schwankungen unterworfen ist. Je nachdem zu welchem Zeitpunkt ein Benutzer bestimmte Streckenabschnitte passiert, benötigt er dafür eine kürzere oder längere Fahrzeit. Indem mindestens einer Kante eine vom Zeitpunkt abhängige voraussichtliche Fahrzeit zugeordnet wird, kann die Routenplanung für Routen entlang dieser mindestens einen Kante unterschiedliche benötigte gesamte Fahrzeiten vorhersagen, beispielsweise in Abhängigkeit von der Tages- oder Uhrzeit. Die gesamten Fahrzeiten ergeben sich dabei aus der Summe aus der bzw. den zeitpunktabhängigen Fahrzeiten und der statischen Fahrzeit für die übrigen Kanten der Route, wobei die statische Fahrzeit mit den üblichen Verfahren, also beispielsweise aus der Summe der Kantenlängen und der mittleren Geschwindigkeit, bestimmt wird. Bei dem vorgeschlagenen Verfahren wird also die bisher grobe Abschätzung von Fahrzeitänderungen aufgrund von Verkehrsinformationen durch genaue Daten ersetzt. Die vorhergesagte Fahrzeit ändert sich graduell mit dem vorgegebenen Zeitpunkt und nicht mehr in großen Sprüngen. Ein allmähliches Auf- und Abbauen von Staus wird also direkt berücksichtigt.

Der vorgegebene Zeitpunkt, von dem die der mindestens einen Kante zugeordnete voraussichtliche Fahrzeit abhängt, wird bei dem Verfahren bevorzugt als der Zeitpunkt bestimmt, zu dem der Benutzer des Routenplanungssystems die mindestens eine Kante voraussichtlich erreichen wird. Entweder gibt der Benutzer diesen Zeitpunkt direkt vor oder er wird vom Routenplanungssystem ausgehend vom Abfahrtszeitpunkt und dem Abfahrtsort des Benutzers berechnet. Auf diese Weise kann also eine abfahrtzeitabhängige Routenplanung durchgeführt werden, mit deren Hilfe ein Benutzer beispielsweise im Vorfeld klären kann, zu welcher Tageszeit die voraussichtlich schnellste Fahrt möglich ist.

Die voraussichtliche Fahrzeit kann für die mindestens eine Kante aus einem historischen Zeitprofil der mittleren Geschwindigkeit dieser Kante oder aus dem historischen Zeitprofil der tatsächlichen Fahrzeit dieser Kante gewonnen werden. Solche Zeitprofile werden durch einfache Messungen dadurch generiert, dass die jeweilige Größe über einen bestimmten Zeitraum, beispielsweise den Verlauf eines Tages, einer Woche oder eines Monats, aufgezeichnet wird. Bei einem solchen Zeitprofil ist also eine direkte, beispielsweise tabellarische, Zuordnung zwischen einem festen Zeitpunkt und der gemessenen Größe möglich. Aus der zugeordneten tatsächlichen Fahrzeit bzw. der mittleren Geschwindigkeit und der Kantenlänge kann dann auf einfache Weise die voraussichtliche Fahrzeit zu dem jeweiligen Zeitpunkt ermittelt werden.

Weiterhin wird bei dem vorgeschlagenen Verfahren die voraussichtliche Fahrzeit für die mindestens eine Kante zusätzlich mit einem Zuverlässigkeitswert versehen. Dieser Zuverlässigkeitswert stellt ebenfalls eine Kanteneigenschaft dar und ermöglicht eine Bewertung der von der Routenplanung errechneten Gesamtfahrzeit. Je höher dieser Wert ist desto mehr kann sich der Benutzer darauf verlassen, dass seine benötigte Fahrzeit für die betroffene Kante die voraussichtliche Fahrzeit nicht überschreiten wird.

Der Zuverlässigkeitswert kann wiederum einem historischen Zeitprofil der Standardabweichung der tatsächlichen Fahrzeit bzw. der Standardabweichung der mittleren Geschwindigkeit der mindestens einen Kante entnommen werden. Um ein solches Zeitprofil zu generieren, werden die tatsächliche Fahrzeit oder die mittlere Geschwindigkeit nicht nur über einen bestimmten Zeitraum sondern über mehrere gleiche Zeiträume, beispielsweise mehrere aufeinander folgende Montage, aufgezeichnet. Daraus resultieren mehrere, vergleichbare Zeitprofile der jeweiligen Größe, deren Standardabweichung berechnet werden kann.

Insgesamt werden damit zu jeder Kante mindestens zwei historische Zeitprofile generiert und abgespeichert, einmal ein Zeitprofil der tatsächlichen Fahrzeit oder der mittleren Geschwindigkeit der jeweiligen Kante und einmal ein Zeitprofil der zugehörigen Standardweichung. Je nachdem in welchen Zeitabständen Stützwerte dieser Zeitprofile gemessen und gespeichert werden und je nach Länge des insgesamt abzuspeichernden Zeitraums fallen pro Zeitprofil erhebliche Datenmengen an. Multipliziert mit der Anzahl der mit jeweils zwei solcher Zeitprofilen versehenen Kanten ergibt sich ein erheblicher Speicherplatzbedarf.

Aufgabe der vorliegenden Erfindung ist es, ein Verfahren und ein Routenplanungssystem der eingangs genannten Art anzugeben, mit denen Daten für eine dynamische Routenplanung unter Berücksichtigung der Speicherplatzproblematik bereitgestellt werden.

Diese Aufgabe wird mit einem Verfahren nach Anspruch 1 und mit einem Routenplanungssystem nach Anspruch 11 gelöst.

Erfindungsgemäß werden die für eine zeitpunktabhängige Routenplanung benötigten Daten eines ersten und eines zweiten Zeitprofils einer Kanteneigenschaft in die Form eines ersten und eines zweiten Normierungsfaktors sowie eines normierten Zeitprofils der Kanteneigenschaft gebracht und abgespeichert. Nimmt man an, dass ein jedes Zeitprofil n Stützpunkte aufweist und dass ein Stützpunkt aus zwei Daten, nämlich einer Zeitangabe und einem so genannten Stützwert, also dem Wert der zugeordneten Kanteneigenschaft, besteht, dann reduziert das erfindungsgemäße Verfahren die zwei Zeitprofile mit 2*n Stützpunkten und damit 4*n Daten auf zwei Normierungsfaktoren sowie ein Zeitprofil mit 1*n Stützpunkten, also auf insgesamt 2*n+2 Daten. Die Einsparung beträgt demnach 2*n-2 Daten je Kante. Bei einem Zeitprofil für einen Zeitraum von 24 Stunden kann die Zahl n bereits ein bis mehrere Hundert betragen. Je länger der dem Zeitprofil zugrunde gelegte Zeitraum ist, desto größer wird die Zahl n und desto größer ist die erfindungsbedingte Speicherplatzersparnis.

Bei dem erfindungsgemäßen Routenplanungssystem werden die für eine zeitpunktabhängige Routenplanung benötigten Daten eines ersten und eines zweiten Zeitprofils der Kanteneigenschaft in Form eines ersten und eines zweiten Normierungsfaktors sowie eines normierten Zeitprofils in dem ersten Speicher, der gleichzeitig das Straßennetz in Form einer Datenbank enthält, oder in einem zweiten Speicher abgelegt. Der zweite Speicher kann ein Festwertspeicher oder ein flüchtiger Speicher sein, je nachdem, ob die Zeitprofile permanent im Routenplanungssystem vorgehalten werden sollen oder ob sie je nach Bedarf per Funk an das Routenplanungssystem übertragen werden.

Bevorzugt sind das erste und das zweite Zeitprofil direkt vergleichbar, d.h. das erste und das zweite Zeitprofil gehören entweder zu ein und derselben Kante, wobei das erste Zeitprofil einem ersten Zeitraum und das zweite Zeitprofil einem zweiten Zeitraum zugeordnet ist oder die beiden Zeitprofile sind unterschiedlichen Kanten, nämlich einer ersten und einer zweiten Kante, zugeordnet und beschreiben dabei jeweils denselben Zeitraum. Aufgrund der Vergleichbarkeit ist es mit relativ wenig Aufwand möglich, aus dem ersten und dem zweiten Zeitprofil ein normiertes Zeitprofil zu generieren.

Ein bevorzugtes Verfahren zur Generierung eines normierten Zeitprofils wird in Anspruch 4 beschrieben. Dabei wird jeweils nach einem vorgegebenen Kriterium dem ersten Zeitprofil ein erster Basiswert der Kanteneigenschaft und dem zweiten Zeitprofil ein zweiter Basiswert der Kanteneigenschaft zugeordnet. Für jeden Stützwert des ersten bzw. zweiten Zeitprofils wird dann ein erster bzw. zweiter Stützwert-Faktor ermittelt und einem ersten bzw. zweiten Stützwert-Vektor zugeordnet. Der Stützwert-Vektor weist also am Ende des Verfahrens dieselbe Anzahl n an Elementen auf wie ein Zeitprofil an Stützpunkten. Der erste bzw. zweite Stützwert-Faktor wird dabei so gefunden, dass er multipliziert mit dem ersten bzw. zweiten Basiswert wieder den jeweiligen Stützwert ergibt. Aus dem so gewonnenen ersten und zweiten Stützwert-Vektor kann nun ein normiertes Zeitprofil generiert werden und aus dem ersten und zweiten Basiswert ein erster und zweiter Normierungsfaktor. Mit anderen Worten wird jedes Zeitprofil in einen Basiswert bzw. Basisfaktor und einen relativen zeitlichen Verlauf der Kanteneigenschaft zerlegt. Wählt man ein geschicktes Kriterium zur Festlegung des Basiswertes, so lassen sich auf diese Weise sehr einfach diejenigen Zeitprofile finden, die einen ähnlichen bzw. nahezu gleichen relativen Verlauf aufweisen und sich lediglich im Basiswert unterscheiden. Anstelle der Division der Stützwerte durch den Basiswert kann auch eine Subtraktion zur Generierung der Stützwert-Faktoren verwendet werden. Dann werden das erste und das zweite Zeitprofil lediglich um einen durch den Basiswert festgelegten Offset reduziert.

Ein bevorzugtes Kriterium zur Festlegung der Basiswerte ist die Wahl des ersten in einem Zeitprofil enthaltenen Stützwertes als Basiswert. Auf diese Weise beginnt der relative Verlauf, also das erste Element des Stützwert-Vektors, beim Wert Eins und alle folgenden Elemente des Stützwert-Vektors zeigen durch ihren gegenüber Eins größeren oder kleineren Wert die jeweilige Abweichung vom Anfangswert des Zeitprofils an und ergeben damit in einem Diagramm wieder dieselbe Kurvenform wie das ursprüngliche Zeitprofil. Da auf diese Weise alle Stützwert-Vektoren bei Eins beginnen, ist ein direkter Vergleich der jeweiligen Verläufe einfach möglich und es können sehr schnell ähnlich bzw. gleich verlaufende Zeitprofile gefunden werden.

Ein alternatives Kriterium zur Bestimmung des Basiswertes eines Zeitprofils ist die Bildung des Mittelwertes aus allen in dem Zeitprofil enthaltenen Stützwerten. Auch bei diesem Kriterium ist anschließend wieder ein direkter Vergleich der relativen Verläufe und damit der Stützwert-Vektoren möglich, wobei die relativen Verläufe nicht zwangsläufig alle bei Eins beginnen, sondern alle um den Mittelwert Eins schwanken.

Bei einem Vergleich der Stützwert-Vektoren lassen sich also alle gleich bzw. ähnlich verlaufenden Zeitprofile herausfinden. Bevorzugt wird dabei ein Differenz-Vektor aus dem ersten und dem zweiten Stützwert-Vektor gebildet und es wird geprüft, ob alle Elemente dieses Differenz-Vektors unterhalb eines vorgegebenen Grenzwertes liegen. Nur wenn dies der Fall ist, wird aus dem ersten und dem zweiten Stützwert-Vektor ein normiertes Zeitprofil gebildet, da nur für diese wenigstens ähnlichen Zeitprofile eine Wiederherstellung des ursprünglichen Verlaufs aus dem normierten Zeitprofil und einem jeweiligen Normierungsfaktor möglich ist. Um nicht alle Werte des Differenz-Vektors einzeln überprüfen zu müssen, wird erst nach dem maximalen Element des Differenz-Vektors gesucht und dieses wird dann mit dem Grenzwert verglichen.

Das normierte Zeitprofil wird in einer Ausgestaltung der Erfindung durch Mittelwert-Bildung aus dem ersten und dem zweiten Stützwert-Vektor generiert. Alternativ kann auch einer der beiden Stützwert-Vektoren direkt als normiertes Zeitprofil abgespeichert werden.

Hat man den ersten und den zweiten Basiswert so gebildet, dass die Stützwert-Vektoren unmittelbar, das heißt ohne weitere Normierung oder Korrektur, vergleichbar sind, so können die Basiswerte in einer weiteren Ausgestaltung direkt als erster und zweiter Normierungsfaktor abgespeichert werden.

Die Erfindung wird nachfolgend anhand eines Ausführungsbeispiels und der Zeichnung näher erläutert. Es zeigen:
- Fig. 1: ein Routenplanungssystem zur zeitpunktabhängigen Routenplanung;
- Fig. 2: ein historisches Zeitprofil der mittleren Geschwindigkeit über einer Woche;
- Fig. 3: zwei historische Zeitprofile der tatsächlichen Fahrzeit über einem Tag, für denselben Streckenabschnitt;
- Fig. 4: den Verlauf der aus Fig. 3 resultierenden Stützwert-Faktoren;
- Fig. 5: das normierte Zeitprofil zu Fig. 3;
- Fig. 6: ein Ablaufdiagramm eines Verfahrens zur Generierung eines normierten Zeitprofils und von Normierungsfaktoren.

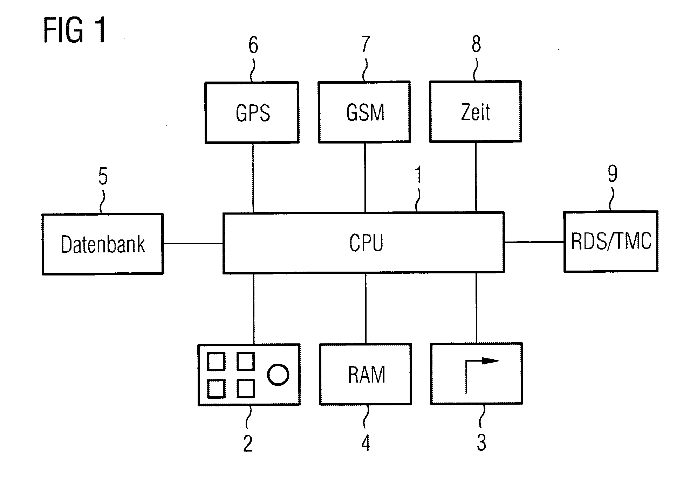

In Figur 1 sind die Bestandteile eines in ein Kraftfahrzeug eingebauten Routenplanungssystems dargestellt, wobei das Routenplanungssystem für eine zeitpunktabhängige Routenplanung ausgelegt ist. Dieses Routenplanungssystem ist in ein nicht dargestelltes Navigationssystem integriert zur anschließenden Navigation des Fahrzeugführers entlang der berechneten Route. Zentrales Element des Routenplanungssystems ist die Recheneinheit 1, mit der alle übrigen Komponenten verbunden sind, nämlich eine Eingabeeinheit 2, eine Anzeigeeinheit 3, eine in einem ersten, nichtflüchtigen Speicher 5 abgelegte Datenbank, ein zweiter flüchtiger Speicher 4, Mittel zur Positionsbestimmung 6, ein Modul zum Aufbau einer drahtlosen Kommunikationsverbindung 7, ein Modul zur Bestimmung der aktuellen Zeit 8 und ein Modul zum Empfang von Verkehrsinformationen 9. Bei dem Routenplanungssystem sind die Module zum Aufbau einer drahtlosen Kommunikationsverbindung 7, zur Bestimmung der aktuellen Zeit 8 und zum Empfang von Verkehrsinformationen 9 optional, da die darüber ermittelten Informationen auch auf anderem Wege, beispielsweise per Benutzereingabe, erlangt werden könnten. Das übergeordnete Navigationssystem verfügt neben den zum Routenplanungssystem gehörenden Elementen noch über weitere Mittel zur genaueren Bestimmung der aktuellen Position, wie beispielsweise einen Gierratensensor und Schnittstellen zu Raddrehzahlsensoren. Sofern eine gegenüber der reinen GPS-Positionsmessung mittels Modul 6 genauere Positionsbestimmung nicht möglich ist, genügt für die Zwecke der zeitpunktabhängigen Routenplanung auch die reine GPS-Information, da für die Planung einer neuen, dynamischen Route in Abhängigkeit vom aktuellen Standort des Benutzers eine ungefähre Kenntnis dieses Standortes ausreicht.

Der erste Speicher 5 des Routenplanungssystems enthält ein in Knoten und in Kanten unterteiltes Straßennetz, wobei allen Kanten jeweils eine voraussichtliche, also eine voraussichtlich für diese Kante benötigte, Fahrzeit zugeordnet ist. Da bisher nur für einige Kanten die tatsächlich für diese Kanten benötigte Fahrzeit messtechnisch ermittelt wurde, wird auch nur diesen Kanten die Fahrzeit in Form eines historischen Zeitprofils zugeordnet. Die übrigen Kanten sind mit einer zeitpunktunabhängigen Fahrzeit versehen. Die mit einem Zeitprofil versehenen Kanten gehören entweder zur Gruppe an Straßen mit der höchsten Kategorie, also Autobahnen und Schnellstraßen, oder zur Gruppe der Haupt- und Durchfahrtsstraßen in Ballungsgebieten gehören. Sobald auch die Straßen niedrigerer Kategorie vermessen sind und sofern der dann zusätzlich benötigte Speicherplatz zur Verfügung steht, ist auch die Abspeicherung der historischen Zeitprofile für alle Kanten vorgesehen. Auf Basis der im ersten Speicher 5 abgelegten Daten kann die Recheneinheit 1 eine dynamische, zeitpunktabhängige Routenplanung durchführen, da ausgehend von der mittels Modul 8 bestimmten aktuellen Zeit jeweils die voraussichtliche Ankunftzeit an einer bestimmten Kante vorausberechnet und zu dieser Ankunftzeit der zugehörige Wert der voraussichtlichen Fahrzeit aus dem historischen Zeitprofil gewonnen werden kann.

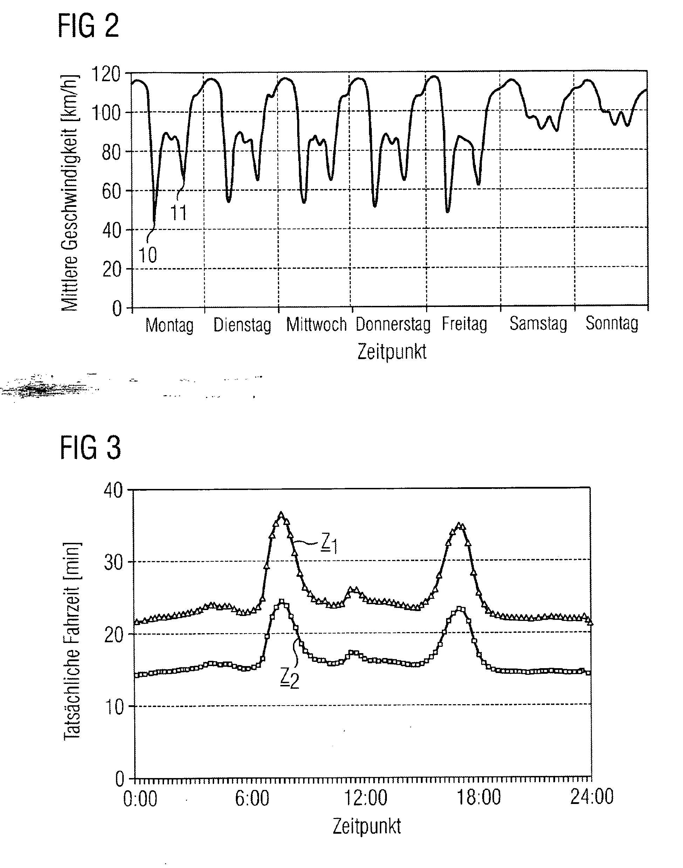

Figur 2 zeigt ein historisches Zeitprofil der gemessenen, mittleren Geschwindigkeit, welches im Verlauf einer Woche auf einem Streckenabschnitt einer Schnellstraße nahe Antwerpen durch Messungen ermittelt wurde. Man sieht die deutlichen Unterschiede im Verlauf eines Tages und im Vergleich zwischen den Arbeitstagen und den Tagen am Wochenende. Die mittlere Geschwindigkeit beispielsweise am Montag weist insbesondere zwei deutliche Geschwindigkeitseinbrüche 10 und 11 auf, die zu Zeiten des Berufsverkehrs am Vormittag (10) und am Nachmittag (11) aufgetreten sind. Würde das Zeitprofil aus Fig. 2 im Speicher 5 abgelegt sein, müsste die Recheneinheit 1 die für einen vorgegebenen Zeitpunkt, beispielsweise Montag, 10:24 Uhr, aus dem Speicher 5 ausgelesene mittlere Geschwindigkeit von rund 80 km/h in eine voraussichtliche Fahrzeit umrechnen, indem sie die Länge der zu dem Streckenabschnitt nahe Antwerpen gehörenden Kante durch den Geschwindigkeitswert dividiert.

Dieser Umwandlungsschritt wird in dem Routenplanungssystem aus Figur 1 jedoch noch eingespart, da anstelle der mittleren Geschwindigkeit die tatsächliche Fahrzeit als historisches Zeitprofil gespeichert wird. Zwei Profile Z₁ und Z₂ einer tatsächlichen Fahrzeit sind in Figur 3 abgebildet, wobei beide Profile für dieselbe Kante, nur an unterschiedlichen, aber miteinander vergleichbaren Tagen aufgenommen wurden, wie beispielsweise montags (Z₁) und dienstags (Z₂). Zu sehen ist der Wert der gemessenen Fahrzeit in Minuten über dem Verlauf eines Tages zwischen 0:00 Uhr und 24:00 Uhr. Die Fahrzeit weist zwar an den beiden Tagen qualitativ ein vergleichbares Profil auf mit den zu erwartenden Fahrzeitverlängerungen zu den Zeiten des Berufsverkehrs, jedoch weicht sie im Mittel voneinander ab. Das Profil Z₁ zeigt eine um rund 10 Minuten längere Fahrzeit.

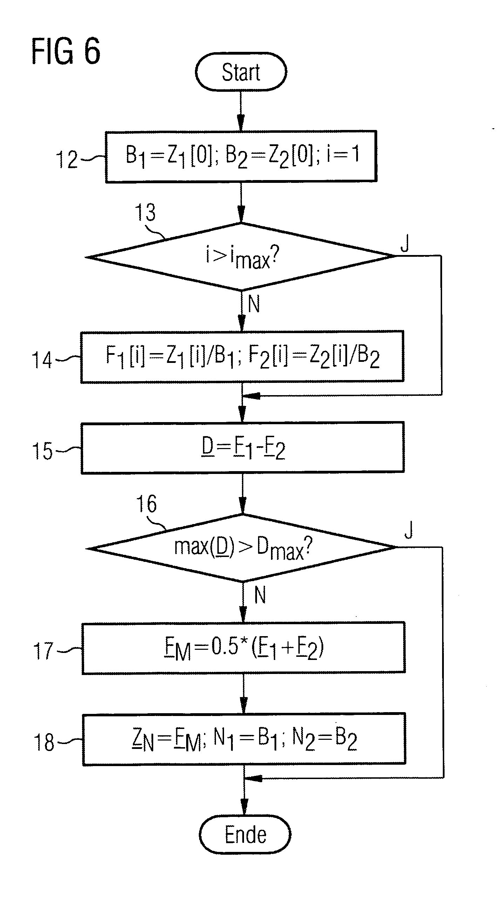

Wie in Figur 2 zu erkennen ist, bestehen die für dieselbe Kante gemessenen Zeitprofile Z₁ und Z₂ aus vielen einzelnen Stützpunkten, deren Stützwerte im Folgenden als Z₁[i] und Z₂[i] bezeichnet werden. Der Index i läuft dabei von Null bis zum Wert iₘₐₓ. Da beide Zeitprofile zu denselben Zeitpunkten Stützpunkte aufweisen, enthalten sie auch dieselbe Anzahl iₘₐₓ an Stützwerten der tatsächlichen Fahrzeit. Aus den Zeitprofilen Z₁ und Z₂ werden nun entsprechend dem in Figur 6 dargestellten Verfahren zwei Normierungsfaktoren N₁ und N₂ sowie ein normiertes Zeitprofil Z_{N} (Figur 5) generiert und im Speicher 5 des Routenplanungssystems abgelegt.

Das Verfahren nach Figur 6 beginnt in Schritt 12 mit dem Finden der Basiswerte B₁ und B₂ sowie der Initialisierung des Index i auf den Wert Null. Als Basiswerte werden die jeweils ersten in den Zeitprofilen enthaltenen Stützwerte (Z₁[0] und Z₂[0]) gewählt. Aus Figur 3 liest man für die Basiswerte ab B₁=22 und B₂=15.
In Schritt 13 beginnt dann eine Schleife über alle i, d.h. die Schleife wird abgebrochen, wenn das Ende iₘₐₓ+1 der Zeitprofile Z₁ und Z₂ erreicht ist. Innerhalb der Schleife wird in Schritt 14 für das jeweils aktuelle Element der Zeitprofile, also für die Stützwerte Z₁[i] und Z₂[i], ein zugehöriger Stützwertfaktor F₁[i] und F₂[i] berechnet, indem die Stützwerte durch den zugehörigen Basiswert B₁ bzw. B₂ dividiert werden. Nachdem für alle Stützwerte ein zugehöriger Stützwertfaktor ermittelt wurde, liegen als Ergebnis die Stützwert-Vektoren F₁ und F₂ vor.

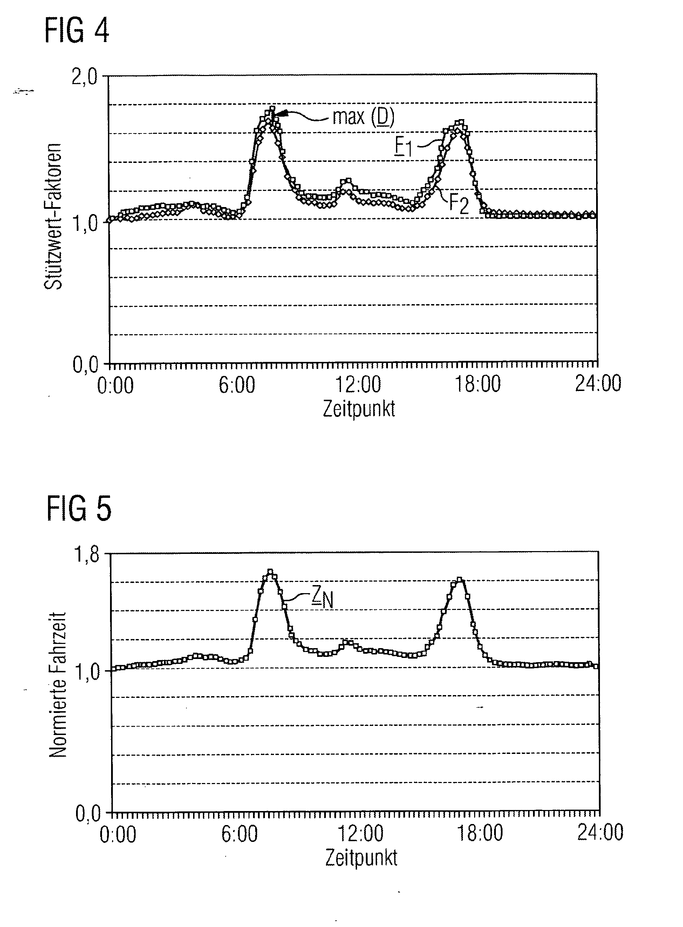

Die Stützwert-Vektoren F₁ und F₂ für die Zeitprofile Z₁ und Z₂ aus Figur 3 sind in der Figur 4 abgebildet. Der Anfangswert beider Stützwert-Vektoren beträgt 1.0. Wie gut zu erkennen ist, wurde durch die geschickte Wahl der Basiswerte B₁ und B₂ unter anderem der unterschiedliche Offset in den Zeitprofilen Z₁ und Z₂ entfernt, wodurch gut vergleichbare Verläufe der Stützwert-Vektoren F₁ und F₂ entstehen.

In Figur 6 wird die elementweise Berechnung der Stützwert-Vektoren ab Schritt 15 abgelöst von Vektorrechnungen. In Schritt 15 wird die Differenz aus den Stützwert-Vektoren F₁ und F₂ errechnet, woraus der Differenz-Vektor D entsteht. Von diesem Differenz-Vektor D wird in Schritt 16 das größte Element max(D) gesucht und mit einem vorgegebenen Grenzwert Dₘₐₓ verglichen. Vergleicht man die Verläufe von F₁ und F₂ in Figur 4, so tritt dort der größte Differenzwert max(D) ungefähr zum Zeitpunkt 8:00 Uhr auf. Für diesen größten Differenzwert kann man max(D)=0.1 ablesen. Als Grenzwert ist ein Wert von Dₘₐₓ=0.2 vorgegeben, d.h. der maximale Differenzwert max(D) liegt noch unterhalb dieser Grenze, weshalb eine Generierung von Normierungsfaktoren und normiertem Zeitprofil durchgeführt werden kann. Wäre der Grenzwert Dₘₐₓ überschritten worden, so wäre das Verfahren nach Figur 6 beendet, ohne dass eine Normierung und damit eine Speicherplatzersparnis für die Zeitprofile Z₁ und Z₂ erreicht werden konnte.

In Schritt 17 wird aus den Stützwert-Vektoren F₁ und F₂ ein Mittelwert-Vektor F_{M} gebildet. Der Mittelwert-Vektor F_{M} wird in Schritt 18 direkt als normiertes Zeitprofil Z_{N} und die Basiswerte B₁ und B₂ werden als Normierungsfaktoren N₁ und N₂ abgespeichert.

Bei einer Abwandlung des Verfahrens nach Figur 6 wird anstelle eines Mittelwert-Vektors F_{M} einer der Stützwert-Vektoren F₁ oder F₂ als normiertes Zeitprofil abgespeichert. In Figur 5 ist beispielsweise der Verlauf des normierten Zeitprofils Z_{N} zu den Stützwert-Vektoren F₁ und F₂ aus Figur 4 zu sehen. Als normiertes Zeitprofil der tatsächlichen Fahrzeit ist demnach der Stützwert-Vektor F₂ abgespeichert worden. Die Normierungsfaktoren wurden entsprechend der zugehörigen Basiswerte als N₁=22 und N₂=15 im Speicher 5 abgelegt.

Führt man basierend auf den so generierten Normierungsgrößen N₁, N₂ und Z_{N} eine zeitpunktabhängige Routenplanung durch, so kann durch einfache Multiplikation des einem vorgegebenen Zeitpunkt zugeordneten Elements des normierten Zeitprofils Z_{N} mit dem jeweiligen Normierungsfaktor N₁ bzw. N₂ der eigentliche Wert der tatsächlichen Fahrzeit wieder zurück gewonnen werden.

Das beschriebene Verfahren lässt sich für beliebige vergleichbare Zeitprofile anwenden, wobei anstelle der Vereinfachung von nur zwei Zeitprofilen auch mehr als zwei Zeitprofile einem einzigen normierten Zeitprofil zugeordnet werden können. So wäre es beispielsweise auch möglich, einen gesamten Wochenverlauf auf ein normiertes Zeitprofil Z_{N1} der Tage Montag bis Freitag mit den Normierungsfaktoren N₁ bis N₅ sowie ein normiertes Zeitprofil Z_{N2} für Samstag und Sonntag mit den Normierungsfaktoren N₆ bis N₇ zu reduzieren.

## Patentansprüche

1. Verfahren zur Generierung und Speicherung von Daten für eine dynamische Routenplanung, wobei die Routenplanung zur Planung einer Route innerhalb eines, in einzelne Kanten und Knoten unterteilten, Straßennetzes durchgeführt wird und wobei die Route in Abhängigkeit von einer, mindestens einer Kante zugeordneten, zeitpunktabhängigen Kanteneigenschaft bestimmt wird, **dadurch gekennzeichnet, dass** für die Routenplanung die Kanteneigenschaft durch ein erstes (Z₁) und ein zweites Zeitprofil (Z₂) beschrieben wird, welche in einen ersten (N₁) und einen zweiten Normierungsfaktor (N₂) sowie ein normiertes Zeitprofil (Z_{N}) der Kanteneigenschaft umgewandelt und abgespeichert werden.

2. Verfahren nach Anspruch 1, **dadurch gekennzeichnet, dass** das erste Zeitprofil (Z₁) einem ersten Zeitraum für die mindestens eine Kante und das zweite Zeitprofil (Z₂) einem zweiten Zeitraum für die mindestens eine Kante zugeordnet ist.

3. Verfahren nach Anspruch 1, **dadurch gekennzeichnet, dass** das erste Zeitprofil (Z₁) einer ersten Kante und das zweite Zeitprofil (Z₂) einer zweiten Kante zugeordnet sind.

4. Verfahren nach einem der vorhergehenden Ansprüche, **dadurch gekennzeichnet, dass** nach einem vorgegebenen Kriterium dem ersten Zeitprofil (Z₁) ein erster Basiswert (B₁) der Kanteneigenschaft und dem zweiten Zeitprofil (Z₂) ein zweiter Basiswert (B₂) der Kanteneigenschaft zugeordnet wird und dass für jeden Stützwert des ersten bzw. zweiten Zeitprofils ein erster (F₁) bzw, zweiter Stützwert-Faktor (F₂) ermittelt und einem ersten (F₁) bzw. zweiten Stützwert-Vektor (F₂) zugeordnet wird, wobei der jeweilige Stutzwert-Faktor multipliziert mit dem zugehörigen ersten (B₁) bzw. zweiten Basiswert (B₂) wieder den jeweiligen Stützwert ergibt, und dass aus dem ersten und dem zweiten Stützwert-Vektor ein normiertes Zeitprofil (Z_{N}) und aus dem ersten Basiswert (B₁) ein erster (N₁) und aus dem zweiten Basiswert (B₂) ein zweiter Normierungsfaktor (N₂) gebildet werden.

5. Verfahren nach Anspruch 4, **dadurch gekennzeichnet, dass** als vorgegebenes Kriterium zur Bestimmung des Basiswertes eines Zeitprofils der erste in dem Zeitprofil enthaltenen Stützwert (Z₁[0], Z₂[0]) als Basiswert ausgewählt wird.

6. Verfahren nach Anspruch 4, **dadurch gekennzeichnet, dass** als vorgegebenes Kriterium zur Bestimmung des Basiswertes eines Zeitprofils der Mittelwert aus allen in dem Zeitprofil enthaltenen Stützwerten als Basiswert bestimmt wird.

7. Verfahren nach einem der vorhergehenden Ansprüche 4 bis 6, **dadurch gekennzeichnet, dass** aus dem ersten und dem zweiten Stützwert-Vektor nur dann ein normiertes Zeitprofil (Z_{N}) gebildet wird, wenn der maximale Wert des Differenz-Vektors (D) unterhalb dem ersten und dem zweiten Stutzwert-Vektor (F₁, F₂) unterhalb eines vorgegebenen Grenzwertes (Dₘₐₓ) liegt.

8. Verfahren nach einem der vorhergehenden Ansprüche 4 bis 7. **dadurch gekennzeichnet, dass** aus dem ersten (F₁) und dem zweiten Stützwert-Vektor (72) ein Mittelwert-Vektor (F_{M}) berechnet und als normiertes Zeitprofil (Z_{N}) gespeichert wird.

9. Verfahren nach einem der vorhergehenden Ansprüche 4 bis 7, **dadurch gekennzeichnet, dass** der erste (F₁) oder der zweite Stützwert-Vektor (F₂) als normiertes Zeitprofil (Z_{N}) gespeichert wird.

10. Verfahren nach einem der vorhergehenden Ansprüche 4 bis 8, **dadurch gekennzeichnet, dass** der erste (B₁) und der zweite Basiswert (B₂) direkt als erster und zweiter Normierungsfaktor abgespeichert werden.

11. Routenplanungssystem zur Speicherung von Daten für eine dynamische Routenplanung mit einer Recheneinheit (1), die mit einer Eingabeeinheit (2), einer Anzeigeeinheit (3) und einem ersten Speicher (5), der ein in einzelne Kanten und Knoten unterteiltes Straßennetz enthält, verbunden ist, wobei die Recheneinheit (1) zur Berechnung einer Route innerhalb des Straßennetzes in Abhängigkeit von einer, mindestens einer Kante zugeordneten, Kanteneigenschaft ausgelegt ist, **dadurch gekennzeichnet, dass** die Recheneinheit zur Durchführung einer zeitpunktabhängigen Routenplanung ausgelegt ist und dass in dem ersten (5) oder einem zweiten Speicher (4) die Daten eines ersten (Z₁) und eines zweiten Zeitprofils (Z₂) dieser Kanteneigenschaft in Form eines ersten (N₁) und eines zweiten Normierungsfaktors (N₂) sowie eines normierten Zeitprofils (Z_{N}) abgelegt sind.

## Claims

1. Method for generating and storing data for dynamic route planning, the route planning being performed to plan a route within a road network divided into individual edges and nodes, and the route being determined as a function of a time-dependent edge property assigned to at least one edge, **characterized in that** for route planning the edge property is described by a first time profile (Z₁) and a second time profile (Z₂), which are converted into a first normalizing factor (N₁) and a second normalizing factor (N₂) plus a normalized time profile (Z_{N}) of the edge property, and saved.

2. Method according to Claim 1, **characterized in that** the first time profile (Z₁) is assigned to a first time period for the at least one edge, and the second time profile (Z₂) is assigned to a second time period for the at least one edge.

3. Method according to Claim 1, **characterized in that** the first time profile (Z₁) is assigned to a first edge and the second time profile (Z₂) is assigned to a second edge.

4. Method according to any of the previous claims, **characterized in that** a first base value (B₁) of the edge property is assigned to the first time profile (Z₁) , and a second base value (B₂) of the edge property is assigned to the second time profile (Z₂) , in each case according to a predefined criterion, and **in that** a first measured-value factor (F₁) or second measured-value factor (F₂) is found for each measured value of the first or second time profile respectively, and assigned to a first measured-value vector (F₁) or second measured-value vector (F₂) respectively, the respective measured value being restored when the associated first base value (B₁) or second base value (B₂) is multiplied by the respective measured-value factor, and **in that** a normalized time profile (Z_{N}) is generated from the first and second measured-value vector, and a first normalizing factor (N₁) is formed from the first base value (B₁) and a second normalizing factor (N₂) from the second base value (B₂) .

5. Method according to Claim 4, **characterized in that** as the predefined criterion for determining the base value of a time profile, the first measured value (Z₁[0], Z₂ [0]) contained in the time profile is selected as the base value.

6. Method according to Claim 4, **characterized in that** as the predefined criterion for determining the base value of a time profile, the average value of all measured values contained in the time profile is defined as the base value.

7. Method according to any of the previous Claims 4 to 6, **characterized in that** a normalized time profile (Z_{N}) is only formed from the first and the second measured-value vector if the maximum value of the difference vector (D) from the first and the second measured-value vector (F₁, F₂) lies below a predefined threshold value (Dₘₐₓ).

8. Method according to any of the previous Claims 4 to 7, **characterized in that** an average-value vector (F_{M}) is calculated from the first measured-value vector (F₁) and the second measured-value vector (F₂), and is saved as the normalized time profile (Z_{N}) .

9. Method according to any of the previous Claims 4 to 7, **characterized in that** the first measured-value vector (F₁) or the second measured-value vector (F₂) is saved as the normalized time profile (Z_{N}) .

10. Method according to any of the previous Claims 4 to 8, **characterized in that** the first base value (B₁) and the second base value (B₂) are saved directly as the first and second normalizing factor.

11. Route planning system for storing data for dynamic route planning, comprising a processing unit (1), which is connected to an input unit (2), a display unit (3) and a first memory (5), which contains a road network divided into individual edges and nodes, the processing unit (1) being designed to compute a route within the road network as a function of an edge property assigned to at least one edge, **characterized in that** the processing unit is designed to perform time-dependent route planning, and **in that** the data from a first time profile (Z₁) and a second time profile (Z₂) of this edge property is saved in the form of a first normalizing factor (N₁) and a second normalizing factor (N₂) and a normalized time profile (Z_{N}) either in the first memory (5) or in a second memory (4).

## Revendications

1. Procédé permettant de générer et de mémoriser des données destinées à une planification dynamique d'itinéraires, où la planification d'itinéraires est exécutée en vue de planifier un itinéraire à travers un réseau de routes comprenant différentes sections et différents noeuds et où l'itinéraire est déterminé en fonction d'une propriété de section dépendant du moment du parcours affectée à au moins une section, **caractérisé par le fait que**, pour la planification d'itinéraires, la propriété de la section est décrite par un premier profil chronologique (Z₁) et par un deuxième profil chronologique (Z₂), qui sont convertis en un premier facteur de normalisation (N₁) et un deuxième facteur de normalisation (N2), ainsi que par un profil chronologique normalisé (Z_{N}) de la propriété de la section, puis mémorisés.

2. Procédé selon la revendication 1, **caractérisé par le fait que** le premier profil chronologique (Z₁) est affecté à une première période de temps pour la au moins une section et que le deuxième profil chronologique (Z₂) est affecté à une deuxième période de temps pour la au moins une section.

3. Procédé selon la revendication 1, **caractérisé par le fait que** le premier profil chronologique (Z₁) est affecté à une première section et que le deuxième profil chronologique (Z₂) est affecté à une deuxième section.

4. Procédé selon l'une des revendications précédentes, **caractérisé par le fait que**, selon un critère donné, une première valeur de base (B₁) de la propriété de la section est affectée au premier profil chronologique (Z₁) et une deuxième valeur de base (B₂) de la propriété de la section est affectée au deuxième profil chronologique (Z₂) et que, pour chaque valeur support du premier et, respectivement, du deuxième profil chronologique, un premier (F₁) et, respectivement, un deuxième (F₂) facteur de valeur support sont déterminés et affectés à un premier (F₁) et, respectivement, à un deuxième (F₂) vecteur de valeur support, le facteur de valeur support respectif, multiplié avec la première valeur de base (B₁) correspondante et, respectivement, la deuxième valeur de base (B₂) correspondante redonnant la valeur support respective, et qu'un profil chronologique normalisé (Z_{N}) est formé à partir du premier et du deuxième vecteur de valeur support et un premier facteur de normalisation (N₁) est formé à partir de la première valeur de base (B₁) et un deuxième facteur de normalisation (N₂) est formé à partir de la deuxième valeur de base (B₂).

5. Procédé selon la revendication 4, **caractérisé par le fait que**, en tant que critère donné pour la détermination de la valeur de base d'un profil chronologique, on choisit en tant que valeur de base la première valeur support (Z₁[0], Z₂[0]) contenue dans le profil chronologique.

6. Procédé selon la revendication 4, **caractérisé par le fait que**, en tant que critère donné pour la détermination de la valeur de base d'un profil chronologique, on choisit en tant que valeur de base la valeur moyenne de toutes les valeurs supports contenues dans le profil chronologique.

7. Procédé selon l'une des revendications précédentes 4 à 6, **caractérisé par le fait qu'**un profil chronologique normalisé (Z_{N}) n'est formé à partir du premier et du deuxième vecteur de valeur support que si la valeur maximum du vecteur différentiel (D) déduit du premier et du deuxième vecteur de valeur support (F₁, F₂) est inférieure à une valeur limite donnée (Dₘₐₓ).

8. Procédé selon l'une des revendications précédentes 4 à 7, **caractérisé par le fait qu'**un vecteur de valeur moyenne (F_{M}) est calculé à partir du premier (F₁) et du deuxième (F₂) vecteur de valeur support et est mémorisé en tant que profil chronologique normalisé (Z_{N}).

9. Procédé selon l'une des revendications précédentes 4 à 7, **caractérisé par le fait que** le premier (F₁) ou le deuxième (F₂) vecteur de valeur support est mémorisé en tant que profil chronologique normalisé (Z_{N}).

10. Procédé selon l'une des revendications précédentes 4 à 8, **caractérisé par le fait que** la première (B₁) et la deuxième (B₂) valeur de base sont mémorisées en tant que premier et deuxième facteur de normalisation.

11. Système de planification d'itinéraires permettant de mémoriser des données destinées à une planification dynamique d'itinéraires, comportant une unité de calcul (1), qui est reliée à une unité de saisie (2), à une unité d'affichage (3) et à une première mémoire (5), laquelle renferme un réseau de routes divisés en différentes sections et différents noeuds, où l'unité de calcul (1) est configurée pour le calcul d'un itinéraire à travers un réseau de routes en fonction d'une propriété de section affectée à au moins une section, **caractérisé par le fait que** l'unité de calcul est configurée pour exécuter une planification d'itinéraires en fonction du moment du parcours et que les données d'un premier profil chronologique (Z₁) et d'un deuxième profil chronologique (Z₂) de cette propriété de la section sont mémorisées dans la première mémoire (5) ou dans une deuxième mémoire (4) sous la forme d'un premier facteur de normalisation (N₁) et d'un deuxième facteur de normalisation (N₂), ainsi que d'un profil chronologique normalisé (Z_{N}) .
